# EUROPEAN PATENT APPLICATION

(11) **EP 2 330 459 A1**
(43) Date of publication of application: **08.06.2011**
(21) Application number: 09812941.4
(22) Date of filing: 22.05.2009
(51) Int. Cl.: G02F 1/1343, G02F 1/1345

(54) **ACTIVE MATRIX SUBSTRATE, DISPLAY PANEL AND DISPLAY DEVICE**

(30) Priority: 12.09.2008 JP 2008235460
(71) Applicant: Sharp Kabushiki Kaisha, Osaka-shi, Osaka 545-8522 (JP)
(72) Inventor: OKADA, Katsuhiro, Osaka-shi, Osaka 545-8522 (JP); MATSUMOTO, Hitoshi, Osaka-shi, Osaka 545-8522 (JP)
(74) Representative: Müller - Hoffmann & Partner
(86) International application number: PCT/JP2009/059456
(87) International publication number: WO 2010/029793

(57) **Abstract**

An active matrix substrate (3) of the present invention includes: a plurality of pixels (5) which constitute a display region (4); and a plurality of dummy pixels (6, 8, 10, 12) which are provided around the display region (4), each of the plurality of pixels (5) having a diagonal pattern (14) of a plurality of diagonal lines each of which has a constant width, at least one of the plurality of dummy pixels (6, 8, 10, 12) having at least one measuring pattern of a plurality of vertical or horizontal lines each of which has the constant width. This allows measurement of a line width of a pattern and alignment correction, without increasing a picture-frame region of the active matrix substrate (3).

## Description

### TECHNICAL FIELD

The present invention relates to an active matrix substrate on which dummy pixels are located around a display region, to a display panel having the active matrix substrate, and to a display apparatus having the display panel.

### Background Art

Conventionally, liquid crystal display apparatuses are contrived by various methods so that reliability of display quality is improved. One of such methods is use of dummy pixels. Although the dummy pixels are located outside a display region of a liquid crystal panel, the dummy pixels are not used in actual display. Patent Literature 1 discloses one example of a liquid crystal display apparatus in which dummy pixels are provided.

Patent Literature 1 discloses an active-matrix liquid crystal display apparatus in which outermost pixel electrodes provided on a first substrate are smaller than other pixel electrodes, and outermost scanning signal lines and outermost display signal lines are provided inward, in order that outermost pixels serve as nondisplay dummy pixels.

The active-matrix liquid crystal display apparatus makes it possible to effectively utilize the substrate, without causing luminance unevenness and a decrease of a capability of sealing of liquid crystal.

On the other hand, various techniques for improving a viewing angle characteristic of a liquid crystal display apparatus have been developed. Patent Literature 2 discloses one example of such techniques. Patent Literature 2 discloses an electrode unit having (i) a plurality of electrodes (branch sections) each of which branches from a stem section so as to extend diagonally with respect to the stem section, and (ii) spaces each of which is located between adjacent branch sections.

This technique makes it possible to orient liquid crystal molecules in various angles. As a result, a viewing angle characteristic can be improved.

### Citation List

Patent Literature 1
   Japanese Patent Application Publication, Tokukaihei, No. 9-5780 A (Publication Date: January 10, 1997)
Patent Literature 2
   Japanese Patent Application Publication, Tokukai, No. 2004-4460 A (Publication Date: January 8, 2004)

### Summary of Invention

According to the technique disclosed in Patent Literature 2, any pixel has a pixel electrode having the diagonal pattern. That is, any pixel has few pixel electrodes with patterns having edges parallel with an X-direction or a Y-direction (i.e., directions parallel with horizontal and vertical sides of the substrate). This causes the following one problem.

In a manufacturing process of an active matrix substrate, photolithography is carried out with respect to a plurality of layers. Accordingly, in a case where one layer is formed with a misalignment with respect to another layer, in other words, in a case where a misalignment is caused, display quality of the active matrix substrate deteriorates. For example, in a case where a pixel electrode is formed with a misalignment from a predetermined position with respect to a source bus line, a voltage to be applied to liquid crystal varies from a predetermined voltage. As a result, a desired display image cannot be obtained.

Further, in a case where exposure is repeated so as to form a display region, and a misalignment of a pixel electrode with respect to a source bus line in a block is different from a misalignment of a pixel electrode with respect to a source bus line in another block, a parasitic capacitance between the source bus line and the pixel electrode varies between the blocks. As a result, a display luminance varies depending on a block, i.e., so-called block separation is caused.

Such deterioration of display quality is also caused in a case where a pattern width is different from a predetermined value. For example, in a case where a width with which a pixel electrode overlaps a source bus line is different from a predetermined width, a parasitic capacitance between the source bus line and the pixel electrode is different from a predetermined value. Accordingly, a voltage to be applied to liquid crystal varies from a predetermined voltage. As a result, a desired display image cannot be obtained. Further, in a case where a pattern of a pixel electrode is made up of minute electrodes each having a width of approximately 2 to 4 µm, and the width is different from a predetermined width, an electric field to be generated by voltage application varies. As a result, a desired orientation of liquid crystal molecules cannot be obtained.

As described above, measurement of a pattern line width and measurement of a misalignment are important in a manufacturing process of active matrix substrates. If necessary, correction of an exposure time and alignment correction are carried out by an exposure device. However, as is the case with coordinate axes of common manufacturing devices, coordinate axes of a line-width measurement device or an exposure device are based on horizontal and vertical sides of a substrate. Therefore, in the case of the pixel electrode of Patent Literature 2 with the diagonal pattern, it is virtually impossible to measure a line width of the pixel and correct misalignment because the pixel electrode hardly has lines parallel with or perpendicular to the reference coordinate axes. Therefore, it is necessary to provide, outside the display region, an additional pattern for measurement of a line width of a pixel and alignment correction. This makes it difficult to reduce a width of a picture-frame of a liquid crystal panel, and deteriorates measurement accuracy.

Patent Literature 1 does not particularly disclose a pattern in a dummy pixel. Therefore, in a case where the pixel electrode of Patent Literature 2 with the diagonal pattern is combined with the technique of Patent Literature 1, pixel electrodes of dummy pixels also have the diagonal patterns. Accordingly, it becomes necessary to provide additional measuring patterns outside the dummy pixels. This makes it difficult to reduce a width of a picture-frame of a liquid crystal panel, and deteriorates measurement accuracy, as is the case with Patent Literature 2.

The present invention was made in view of the problems. An object of the present invention is to provide: an active-matrix substrate which allows, without increasing the picture-frame region of a display panel, measurement of a line width of a pattern and alignment correction; a display panel having the active matrix substrate; and a display apparatus having the display panel.

In order to attain the object, an active matrix substrate of the present invention includes: a plurality of pixels which constitute a display region; and a plurality of dummy pixels which are provided around the display region, each of the plurality of pixels having a diagonal pattern of a plurality of diagonal lines each of which has a constant width, at least one of the plurality of dummy pixels having at least one measuring pattern of a plurality of vertical or horizontal lines each of which has the constant width.

According to the arrangement, the measuring pattern having lines which are parallel with or perpendicular to a reference axis of a line-width measurement device or a alignment correction device is provided in a dummy pixel near the display region. This makes it possible to carry out measurement of a line width and alignment correction, with respect to the lines provided in the dummy pixel. Thus, there is no need to additionally provide a measuring pattern in a wiring (drawing wiring) region. This allows measurement of a line width and alignment correction, without increasing a picture-frame region of the active matrix substrate.

In general, a film thickness of a wiring material and a film thickness of an insulating film in a manufacturing process of the active matrix substrate which constitutes a display panel, and a film thickness of a resist material in a photolithography process vary depending on their positions within a display substrate. Therefore, if a pattern whose line width is actually measured is away from a target measurement region (i.e., display region), a line width etc. can vary depending on a difference in film thickness. This causes an incorrect line width measurement.

In contrast, the display region and the plurality of dummy pixels 12 closely adjacent to each other on the active matrix substrate. Accordingly, the measuring pattern in each of the plurality of dummy pixels is close to the display region. This makes it possible to reduce an effect of variation of film thicknesses. This allows an accurate line width measurement.

Further, the active matrix substrate of the present invention is preferably arranged such that a density at which the at least any one of the plurality of dummy pixels has its all lines including the plurality of vertical or horizontal lines in the at least one measuring pattern is equal to a density at which each of the plurality of pixels has its all lines including the plurality of diagonal lines.

It is known that in microfabrication in which dry etching is carried out, a shape of a fabricated product varies depending on a difference in density at which lines are provided (loading effect). A density at which each of the plurality of dummy pixels has its all lines and a density at which each of the plurality of pixels in the display region has its all lines are identical with each other on the active matrix substrate. This makes it possible to stabilize a line shape to be formed, even if a line pattern of each of the plurality of dummy pixels is different from a line pattern of each of the plurality of pixels. Accordingly, measurement of a line width of one of the plurality of dummy pixels makes it possible to know stably and accurately a line width of the diagonal pattern of each of the plurality of pixels.

Further, the active matrix substrate is preferably arranged such that the at least one of the plurality of dummy pixels has a half part with a diagonal pattern which is adjacent to and identical to the diagonal pattern of a corresponding one of the plurality of pixels.

An oriented state of liquid crystal molecules in each of the plurality of pixels is affected not only by a voltage applied to the liquid crystal but also by orientation of liquid crystal molecules in an adjacent one of the plurality of pixels. In view of this, a line pattern in that half region of each of the plurality of dummy pixels which is adjacent to one of the plurality of pixels is identical with a line pattern of the one of the plurality of pixels. Therefore, an orientation of liquid crystal in one of the plurality of pixels which is adjacent to one of the plurality of dummy pixels is affected by the one of the plurality of dummy pixels to a degree substantially equal to such an effect brought about by adjacent one of the plurality of pixels. As a result, an orientation of liquid crystal in one of the plurality of pixels which is not adjacent to one of the plurality of dummy pixels has a substantially equal level to that of an orientation of liquid crystal in another one of the plurality of pixels which is adjacent to one of the plurality of dummy pixels.

Thus, the active matrix substrate makes it possible to prevent such deterioration of display quality that only outermost ones of the plurality of pixels are displayed differently from other ones in the entire display region.

Further, the active matrix substrate of the present invention is preferably arranged such that the plurality of dummy pixels are provided all around the display region.

According to the arrangement, line patterns parallel with the width direction of the active matrix substrate and line patterns perpendicular to the width direction are provided all around the display region (along all of four sides of the display region). This allows, all around the display region, measurement of a line width, and alignment correction. In other words, this allows easier measurement of a line width, and easier alignment correction. In addition, this allows easy correction for a rotational system.

In order to attain the object, a display panel of the present invention includes any one of the active matrix substrates.

The arrangement allows measurement of a line width of a pattern and alignment correction, without increasing the picture-frame region of the active matrix substrate.

In order to attain the object, a display apparatus of the present invention includes the display panel.

The arrangement allows measurement of a line width of a pattern and alignment correction, without increasing the picture-frame region of the active matrix substrate.

The active matrix substrate of the present invention allows measurement of a line width of a pattern in a pixel and alignment correction, without increasing the picture-frame region of the active matrix substrate.

For a fuller understanding of the nature and advantages of the invention, reference should be made to the ensuing detailed description taken in conjunction with the accompanying drawings.

### Brief Description of Drawings

Fig. 1

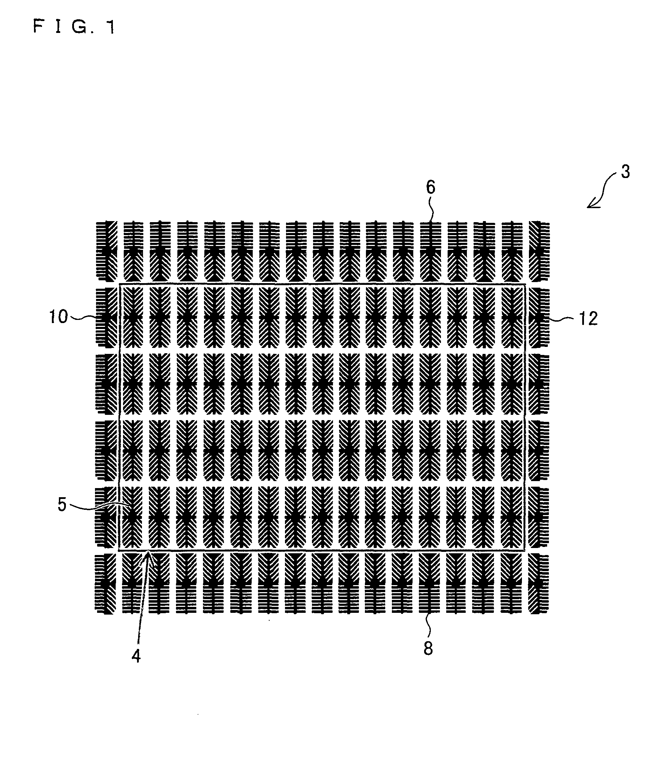

Fig. 1 is a view illustrating an arrangement of a part of a display panel of one embodiment of the present invention.
Fig. 2

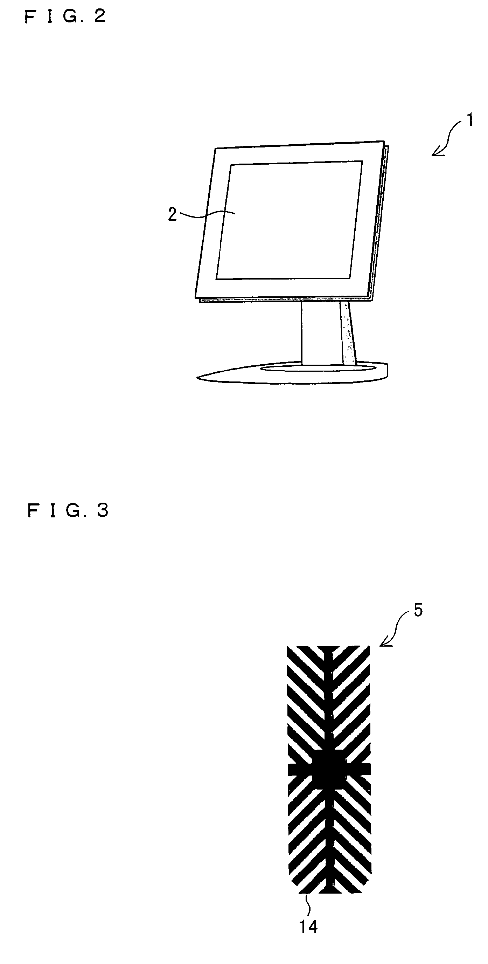

Fig. 2 is a view illustrating an arrangement of a display apparatus of the one embodiment of the present invention.
Fig. 3
Fig. 3 is a view illustrating a line pattern which is formed in a pixel constituting a display region.
Fig. 4

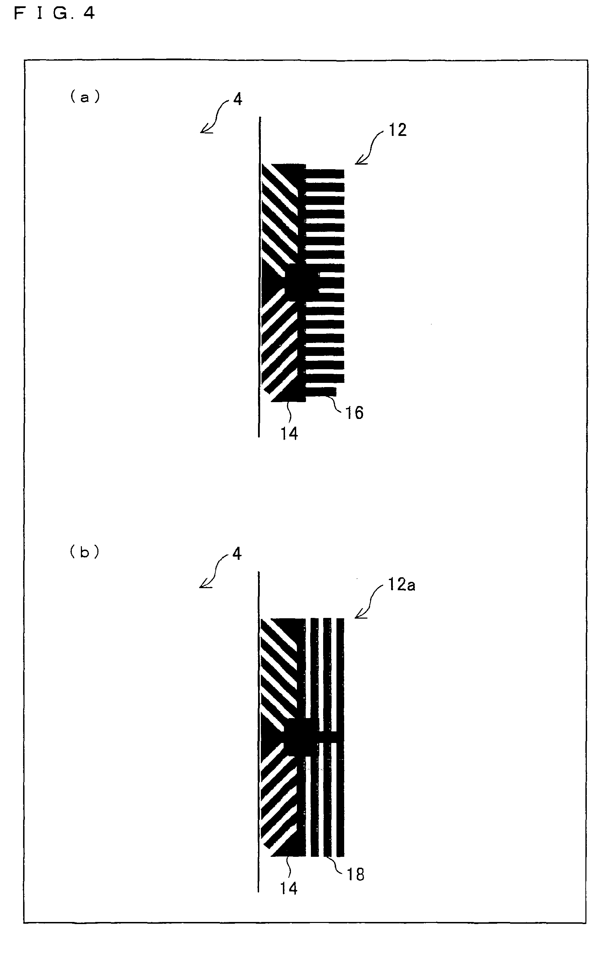

Fig. 4 is a view illustrating dummy pixels. (a) of Fig. 4 is a view illustrating a dummy pixel having a horizontal pattern. (b) of Fig. 4 is a view illustrating a dummy pixel having a vertical pattern.

### Description of Embodiments

The following describes one embodiment of the present invention, with reference to Figs. 1 to 4.

Fig. 2 is a view illustrating an arrangement of a display apparatus 1 of the one embodiment of the present invention. As illustrated in Fig. 2, the display apparatus 1 includes a display panel 2. According to the present embodiment, the display panel 2 is a liquid crystal display panel which displays an image by utilizing a change of an oriented state of liquid crystal. Accordingly, the display apparatus 1 is a so-called liquid crystal display apparatus. However, the present invention is not limited to the display panel 2 and the display apparatus 1 in each of which liquid crystal is utilized.

Fig. 1 is a view illustrating an arrangement of a part of an active matrix substrate 3 of the one embodiment of the present invention. As illustrated in Fig. 1, the active matrix substrate 3 includes a plurality of pixels 5, a plurality of dummy pixels 6, a plurality of dummy pixels 8, a plurality of dummy pixels 10, and a plurality of dummy pixels 12. The active matrix substrate 3 and a common substrate (not illustrated) constitute the display panel 2.

In the active matrix substrate 3, the plurality of pixels 5 are arranged in a matrix pattern so as to define a single display region 4. An image, a character, and/or the like is displayed by combining that pixel(s) in the plurality of pixels 5 in the display region 4 which is ON with that pixel(s) in the plurality of pixels 5 which is OFF. The plurality of dummy pixels 6, the plurality of dummy pixels 8, the plurality of dummy pixels 10, and the plurality of dummy pixels 12 are provided around the display region 4, and not used in display of an image, a character, and/or the like. That is, each of the plurality of dummy pixels 6, the plurality of dummy pixels 8, the plurality of dummy pixels 10, and the plurality of dummy pixels 12 has a shape of a pixel but has no function of a pixel. The plurality of dummy pixels 6 are provided above the display region 4. The plurality of dummy pixels 8 are provided below the display region 4. The plurality of dummy pixels 10 are provided on the left side of the display region 4. The plurality of dummy pixels 12 are provided on the right side of the display region 4.

Fig. 3 is a view illustrating a wiring pattern which is provided in each of the plurality of pixels 5 which constitute the display region 4. As illustrated in Fig. 3, each of the plurality of pixels 5 has a diagonal pattern 14 of a plurality of diagonal lines each of which has a constant width. It is sufficient to provide the diagonal pattern 14 to at least one of a plurality of layers which constitute each of the plurality of pixels 5. For example, each of pixel electrodes can have the diagonal pattern 14. Further, in a case where a common electrode is provided on an active matrix substrate side as is the case with the IPS (In Plane Switching), the common electrode can have the diagonal pattern 14. In this case, as illustrated in Fig. 3, a pixel electrode of each of the plurality of pixels 5 has the diagonal pattern 14 in which lines are oriented in at least two directions. This makes it possible to orient, broadly in four directions, molecules of liquid crystal in each of the plurality of pixels 5.

(a) of Fig. 4 is a view illustrating one of the plurality of dummy pixels 12 having a horizontal pattern 16. (b) of Fig. 4 is a view illustrating one of a plurality of dummy pixels 12a having a vertical pattern 18. As illustrated in (a) of Fig. 4, a diagonal pattern 14 which is identical with the diagonal pattern 14 that each of the plurality of pixels 5 has is provided in that half region of the one of the plurality of dummy pixels 12 which is adjacent to the display region 4, i.e., in the half (left half) region which is directly adjacent to one of the plurality of pixels 5. On the other hand, the horizontal pattern 16 is provided in that other half (right half) region of the one of the plurality of dummy pixels 12 which is not adjacent to the one of the plurality of pixels 5. A width of each of a plurality of lines constituting the horizontal pattern 16 is identical with a width of each of the plurality of diagonal lines constituting the diagonal pattern 14. The plurality of lines constituting the horizontal pattern 16 are parallel with a width direction of the active matrix substrate 3. In other words, the plurality of lines are parallel with a reference axis of a line-width measurement device or an alignment correction device.

Therefore, measurement of a line width of the horizontal pattern 16 of one of the plurality of dummy pixels 12 makes it possible to know a line width of the diagonal pattern 14 of each of the plurality of pixels 5 in the display region 4. In addition, measurement of an amount of misalignment of the horizontal pattern 16 makes it possible to correct misalignment of the diagonal pattern 14. Therefore, there is no need to additionally provide, outside each of the plurality of dummy pixels 12, a measuring pattern for line width measurement. This allows measurement of a line width and alignment correction, without increasing a picture-frame region of the active matrix substrate 3.

In general, a film thickness of a wiring material and a film thickness of an insulating film in a manufacturing process of the active matrix substrate 3, and a film thickness of a resist material in a photolithography process vary depending on their positions within a display substrate. Therefore, if a pattern whose line width is actually measured is away from a target measurement region (i.e., display region), a line width etc. can vary depending on a difference in film thickness. This results in an incorrect line width measurement.

In contrast, as illustrated in Fig. 1 and (a) of Fig. 4, the display region 4 and the plurality of dummy pixels 12 are closely adjacent to each other on the active matrix substrate 3. Accordingly, the horizontal pattern 16 in each of the plurality of dummy pixels 12 is close to the display region 4. This makes it possible to reduce an effect of variation between film thicknesses of lines. This allows an accurate line width measurement.

As illustrated in (b) of Fig. 4, a plurality of dummy pixels 12a can be provided on the right side of the display region 4, instead of the plurality of dummy pixels 12. A diagonal pattern 14 which is identical with the diagonal pattern 14 that each of the plurality of pixels 5 has is provided in that half region of each of the plurality of dummy pixels 12a which is adjacent to the display region 4, i.e., in the half region which is directly adjacent to one of the plurality of pixels 5. On the other hand, the vertical pattern 18 is provided in that other half region of each of the plurality of dummy pixels 12a which is not adjacent to the one of the plurality of pixels 5. A width of each of a plurality of lines constituting the vertical pattern 18 is identical with a width of each of the plurality of diagonal lines constituting the diagonal pattern 14. The plurality of lines constituting the vertical pattern 18 are parallel with a length direction of the active matrix substrate 3. In other words, the plurality of lines are parallel with a reference axis of a line-width measurement device or an alignment correction device. Therefore, measurement of a line width of the vertical pattern 18 makes it possible to know a line width of each of the plurality of pixels 5.

It is known that in microfabrication in which dry etching is carried out, a shape of a fabricated product varies depending on a difference in density at which lines are provided (loading effect). As illustrated in Fig. 3 and (a) of Fig. 4, a density at which each of the plurality of dummy pixels 12 has its all lines and a density at which each of the plurality of pixels 5 in the display region 4 has its all lines are identical with each other on the active matrix substrate 3. This makes it possible to stabilize a line shape to be formed, even if a line pattern of each of the plurality of dummy pixels 12 is different from a line pattern of each of the plurality of pixels 5. Accordingly, measurement of a line width of one of the plurality of dummy pixels 12 makes it possible to know stably and accurately a line width of the diagonal pattern 14 of each of the plurality of pixels 5.

According to the present embodiment, a diagonal pattern 14 which is identical with the diagonal pattern 14 that each of the plurality of pixels 5 has is provided in that half region of each of the plurality of dummy pixels 12 which is adjacent to one of the plurality of pixels 5, as illustrated in (a) of Fig. 4. An oriented state of liquid crystal molecules in each of the plurality of pixels 5 is affected not only by a voltage applied to the liquid crystal but also by orientation of liquid crystal molecules in an adjacent one of the plurality of pixels 5. In view of this, a line pattern in that half region of each of the plurality of dummy pixels 12 which is adjacent to one of the plurality of pixels 5 is identical with a line pattern of the one of the plurality of pixels 5. The same holds for the plurality of dummy pixels 6, the plurality of dummy pixels 8, and the plurality of dummy pixels 10. Therefore, an orientation of liquid crystal in one of the plurality of pixels 5 which is adjacent to one of the plurality of dummy pixels 12 is affected by the one of the plurality of dummy pixels 12 to a degree substantially equal to such an effect brought about by adjacent one of the plurality of pixels 5. As a result, an orientation of liquid crystal in one of the plurality of pixels 5 which is not adjacent to one of the plurality of dummy pixels 12 has a substantially equal level to that of an orientation of liquid crystal in another one of the plurality of pixels 5 which is adjacent to one of the plurality of dummy pixels 12.

Further, as illustrated in Fig. 1, the plurality of dummy pixels 6, the plurality of dummy pixels 8, and the plurality of dummy pixels 10 are arranged as is the case with the plurality of dummy pixels 12. That is, a line pattern in that half (lower half) region of each of the plurality of dummy pixels 6 which is adjacent to one of the plurality of pixels 5 is identical with the diagonal pattern 14 of the one of the plurality of pixels 5. Further, a line pattern in that half (upper half) region of each of the plurality of dummy pixels 8 which is adjacent to one of the plurality of pixels 5 is identical with the diagonal pattern 14 of the one of the plurality of pixels 5. Further, a line pattern in that half (right half) region of each of the plurality of dummy pixels 10 which is adjacent to one of the plurality of pixels 5 is identical with the diagonal pattern 14 of the one of the plurality of pixels 5.

Thus, among all the plurality of pixels 5 in the display region 4, any one which is adjacent to any one of the plurality of dummy pixels 6, the plurality of dummy pixels 8, the plurality of dummy pixels 10, and the plurality of dummy pixels 12 is surrounded by the diagonal patterns 14. That is, such one of the plurality of pixels 5 is the same as those which are not adjacent to any one of such dummy pixels. Accordingly, all the plurality of pixels 5 in the display region 4 realizes the same display quality. This makes it possible to prevent the active matrix substrate 3 from having such a problem of deterioration of display quality that only outermost ones of the plurality of pixels 5 are displayed differently from other ones in the entire display region 4.

Further, according to the present embodiment, each of all such dummy pixels on the active matrix substrate 3 has the horizontal pattern 16 or the vertical pattern 18, as illustrated in Fig. 1. That is, line patterns parallel with the width direction of the active matrix substrate 3 and line patterns perpendicular to the width direction are provided all around the display region 4 (along all of four sides of the display region 4). This allows, all around the display region 4, measurement of a line width, and alignment correction. In other words, this allows easier measurement of a line width, and easier alignment correction.

The active matrix substrate 3 constituting the liquid crystal display apparatus 1 can be made as below. s

First, a titanium film, an aluminum film, and a titanium film containing nitrogen are stacked in this order by sputtering on a transparent insulating substrate such as a glass substrate, so as to have respective film thicknesses of 30 nm, 100 nm, and 50 nm. Then, gate signal lines, gate electrodes, storage capacitor lines, etc. are formed by photolithography or dry etching. Then, a silicon nitride film which has a thickness of 400 nm and serves as a gate insulating film is formed so as to cover the gate signal lines, the gate electrodes, storage capacitor lines, etc. Then, an amorphous silicon film which has a thickness of 130 nm and serves as a semiconductor layer is formed on the silicon nitride film. Then, an n+amorphous silicon film which has a thickness of 40 nm and serves as a source electrode and a drain electrode is formed on the amorphous silicon film. The silicon nitride film, the amorphous silicon film, and the n+amorphous silicon film are continuously formed by plasma CVD. A laminated film thus made is subjected to photolithography and dry etching so as to be a semiconductor layer.

Then, a titanium film and an aluminum film are stacked by sputtering so as to have respective thicknesses of 30 nm and 100 nm, in order that a metal film is formed. Then, source signal lines, source electrodes, drain electrodes, and storage capacitor counter electrodes connected with the drain electrodes are formed by photolithography and dry etching.

Then, the n+amorphous silicon layer in the semiconductor layer is etched by use of the source electrodes and the drain electrodes as a mask. Thus, a channel of each of TFTs is formed. On a substrate on which the TFTs are formed, a silicon nitride film which serves as a first interlayer insulating film is formed by plasma CVD so as to have a thickness of 300 nm. Then, a resin is applied onto the silicon nitride film so that an organic insulating film (acrylic resin) is formed which serves as a second interlayer insulating film. Then, the silicon nitride film is etched by using, as a mask, a pattern on the drain electrode and the storage capacitor counter electrode. This allows electrical connections to a contact hole and the drain extraction electrode. Note that the mask is prepared by patterning the organic insulating film (acrylic resin) while being exposed and developed by use of a photomask.

Then, an ITO (Indium Tin Oxide) film of 100 nm, an IZO (Indium Zinc Oxide) film, or the like is formed by sputtering on an interlayer insulating film thus having a bilayer structure. Then, a film thus formed is patterned by photolithography so that pixel electrodes are formed.

An alignment film having a vertical alignment characteristic is formed on each of the active matrix substrate 3 thus made and a counter substrate having color filters and common electrodes. The active matrix substrate 3 and the counter substrate are attached to each other. Then, liquid crystal having negative dielectric anisotropy is filled and sealed inbetween the active matrix substrate 3 and the counter substrate. Thus, a display panel 2 is made.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

For example, the active matrix substrate 3 can be arranged such that at least any one of such dummy pixels provided around the display region 4 has at least one measuring pattern (horizontal pattern 16 or vertical pattern 18) having (i) a plurality of vertical lines each of which has a width equal to a width of each of the diagonal lines constituting the diagonal pattern 14 in each of the plurality of pixels 5, or (ii) a plurality of horizontal lines each of which has a width equal to the width of each of the diagonal lines constituting the diagonal pattern 14 in each of the plurality of pixels 5. That is, in a case where at least any one of all of such dummy pixels has the horizontal pattern 16 or the vertical pattern 18, measurement of a line width of the at least any one of all of such dummy pixels makes it possible to know a line width of each of the plurality of pixels 5 in the display region 4, and correction of misalignment of the at least any one of all of such dummy pixels makes it possible to correct misalignment of each of the plurality of pixels 5.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The present invention is widely applicable to various active matrix substrates, various display panels, and various display devices.

### Reference Signs List

- 1: Display apparatus
- 2: Display panel
- 3: Active matrix substrate
- 4: Display region
- 5: Pixel
- 6, 8, 10, 12, and 12a: Dummy pixel
- 14: Diagonal pattern
- 16: Horizontal pattern
- 18: Vertical pattern

## Claims

1. An active matrix substrate comprising:
a plurality of pixels which constitute a display region; and
a plurality of dummy pixels which are provided around the display region,
each of the plurality of pixels having a diagonal pattern of a plurality of diagonal lines each of which has a constant width,
at least one of the plurality of dummy pixels having at least one measuring pattern of a plurality of vertical or horizontal lines each of which has the constant width.

2. The active matrix substrate as set forth in claim 1, wherein a density at which the at least any one of the plurality of dummy pixels has its all lines including the plurality of vertical or horizontal lines in the at least one measuring pattern is equal to a density at which each of the plurality of pixels has its all lines including the plurality of diagonal lines.

3. The active matrix substrate as set forth in claim 1 or 2, wherein the at least one of the plurality of dummy pixels has a half part with a diagonal pattern which is adjacent to and identical to the diagonal pattern of a corresponding one of the plurality of pixels.

4. The active matrix substrate as set forth in any one of claims 1 through 3, wherein the plurality of dummy pixels are provided all around the display region.

5. A display panel comprising an active matrix substrate recited in any one of claims 1 through 4.

6. A display apparatus comprising a display panel recited in claim 5.

7. The display apparatus as set forth in claim 6, said display apparatus being a liquid crystal display apparatus.
